# EUROPÄISCHE PATENTSCHRIFT

(11) **EP 2 031 290 B1**
(45) Veröffentlichungstag und Bekanntmachung des Hinweises auf die Patenterteilung: **14.05.2014**
(21) Anmeldenummer: 08075682.8
(22) Anmeldetag: 01.08.2008
(51) Int. Cl.: F16L 29/02, F16L 37/30, F16K 23/00, F16L 37/373, F16L 29/04, F16L 37/252

(54) **Kupplungsvorrichtung zum dichtenden Verbinden von flüssige oder gasförmige Medien transportierenden Förderleitungen**
Coupling device for sealed connection of supply channels transporting fluid or gaseous media
Dispositif de connection étanche de conduites transportant des fluides à l'état liquide ou gazeux

(30) Priorität: 25.08.2007 DE 102007041170
(43) Veröffentlichungstag der Anmeldung: 04.03.2009
(73) Patentinhaber: Roman Seliger GmbH, 22848 Norderstedt (DE)
(72) Erfinder: Hamkens, Hauke-Peter, 25832 Tönning (DE); Brandt, Holger, 22869 Schenefeld (DE); Schwarz, Eugen, 21033 Hamburg (DE); Adam, Michael, 24622 Gnutz (DE); Buhk, Birger, 21039 Hamburg (DE)
(74) Vertreter: Stork Bamberger

(56) Entgegenhaltungen:
- DE-U1- 20 113 541
- US-A- 3 106 223
- US-A- 4 989 638

## Beschreibung

Die Erfindung betrifft eine Kupplungsvorrichtung zum dichtenden Verbinden von flüssige oder gasförmige Medien transportierenden Förderleitungen, umfassend zwei Kupplungshälften, die längs einer Leitungsachse eine durch ein Paar Verbindungsleitungen zusammengefügte Durchströmungs-Kupplungsleitung ausbilden, wobei die Verbindungsleitungen bei gekuppelter Kupplungsvorrichtung mit gegeneinandergesetzten Leitungstrennöffnungen einen Leitungstrennquerschnitt zwischen den Verbindungsleitungen in einer Kupplungstrennebene bestimmen, und umfassend eine Schließeinrichtung zum Schließen und Öffnen der Kupplungsvorrichtung sowie eine Ventileinrichtung mit einem Paar Ventilelemente, die zum Öffnen der Kupplungsvorrichtung die Leitungstrennöffnungen schließen. Weitere Merkmale der Kupplungsvorrichtung sind gemäß dem Oberbegriff des Anspruchs 1 bekannt. Die Kupplungsvorrichtung der genannten Art soll als Trockenkupplung arbeiten, also als Kupplung, die bei angeschlossenen, mit Medium beaufschlagten Förderleitungen trocken gekuppelt und entkuppelt werden kann.

Trockenkupplungen werden zum Beispiel im petrochemischen Bereich eingesetzt. Bekannte in der Praxis verwendete Trockenkupplungen unterscheiden im Wesentlichen zwei Ventilprinzipien. Bei dem einen Prinzip werden zwei Kugeln mit Mediumdurchgängen in einander gegenüberliegender Anordnung im Leitungsquerschnitt positioniert. Verbindungsleitungen der Kupplung sind verschlossen, wenn die Bohrungen quer zur Leitungsachse der Kupplung gerichtet sind (z. B. DE 203 06 852, WO 96/25618). Bei dem anderen Prinzip werden zwei Ventile, die gemeinsam axial verschiebbar sind, im Leitungsquerschnitt der Kupplung positioniert. Diese Ventile verschließen in ihrer Ausgangsposition jeweils die zugehörige Verbindungsleitung. Durch gemeinsames axiales Verschieben entsteht ein Durchgang für Medium (z. B. US 5975491, DE 201 13 541). Die Kupplung gemäß DE 201 13 541 ist zudem mit einer Löseeinrichtung ausgestattet, die die Kupplung bei besonderer Beanspruchung der Kupplungsverbindung selbsttätig öffnet.

Die genannten Ventilprinzipien sind mit unterschiedlichen positiven und negativen Eigenschaften verbunden. Bei dem Prinzip mit Kugelventilen erhält man einen freien, gut zu reinigenden Strömungsquerschnitt ohne Druckverlust. Beim Kuppeln unter Druck sind Stellkräfte zum Betätigen der Kugelventile relativ klein. Die Kugelventile lassen sich zwangsführen. Dadurch besteht besondere Eignung der Kupplung für zähe Medien. Zum Verringern einer Mediumrestmenge beim Trennen der Kupplung können die Ventilkugeln kämmen. Ein ansonsten zeitgleiches Schalten der Kugelventile ist dann allerdings nicht möglich. Negative Eigenschaften des Kugelventilprinzips sind insbesondere Einschluss des Mediums in der Kugelbohrung bei geschlossenem Ventil, so dass eine Beeinträchtigung der Durchströmung infolge von aushärtendem Medium entsteht, sowie besonderer konstruktiver Aufwand hinsichtlich der Betätigung nur einer Kupplungshälfte sowie hinsichtlich der Kupplungsdimensionierung.

Bei dem genannten Axialventilprinzip können die Ventile besonders einfach synchron geschaltet werden. Auch dann wird Restmengenanfall beim Trennen der Gehäusehälften weitgehend reduziert. Konstruktion und Herstellung bleiben einfach bzw. kostengünstig. Allerdings sind beim Kuppeln unter Druck zur Ventilverstellung relativ große Kräfte erforderlich. Um dem zu begegnen, müssen zusätzliche Mittel zur Druckentlastung eingesetzt werden. Im Bereich der Ventile entsteht ein eingeengter, unregelmäßiger, zu Strömungsverlusten führender Strömungsquerschnitt. Die Anordnung bzw. die Bauform der Ventile bedingen, dass zur Zwangsführung nur eines Ventils besonderer konstruktiver Aufwand erforderlich ist.

Aus US 4 989 638 ist gemäß Fig. 3 eine gattungsgemäße Kupplungsvorrichtung mit Querkanal-Ventilelementen bekannt, die jeweils mit einem Leitungsverbindungskanal ausgestattet sind, der parallel zu den Verbindungsleitungen der Kupplungsvorrichtung gerichtet ist. Mit dieser Bauform werden einige günstige Eigenschaften der beiden Ventilprinzipien vereinigt. Es bleiben jedoch Unzulänglichkeiten bestehen. Die bekannte Kupplungseinrichtung ist zur wechselnden Verwendung der beiden Querkanal-Ventilelemente derart eingerichtet, dass zum Reinigen abwechselnd jeweils eines der Querkanal-Ventilelemente aus dem zugehörigen Ventilseitenkanal herauszunehmen und das andere Querkanal-Ventilelement mit seinem Leitungsverbindungskanal in Durchlassposition zu setzen ist. Zu diesem Zweck sind die Verschließköpfe der beiden Querkanal-Ventilelemente mit Rückschlagventilen ausgestattet, um Medium, das zwischen die voneinander getrennten Schließköpfe gelangt, abzuführen. Anordnung und Ausbildung der Rückschlagventile stehen einer einfachen Bauform der Kupplungsvorrichtung entgegen, und der Schließvorgang wird beeinträchtigt. Die Ventilelemente müssen regelmäßig aus der Kupplungsvorrichtung ausgebaut werden, um nicht nur die Leitungsverbindungskanäle, sondern auch die Rückschlagventile zu reinigen. Demontage und Montage zum Warten und Reinigen sind nach einzelnen Schließvorgängen erforderlich. Die Kupplungsvorrichtung kann zum Durchleiten und Absperren zäher und/oder leicht aushärtender Medien nicht eingesetzt werden.

Der Erfindung liegen die Ziele zugrunde, eine Kupplungsvorrichtung mit Eigenschaften hervorzubringen, die die genannten günstigen Eigenschaften der beiden Ventilprinzipien weitgehend vereinigen. Die Handhabung zum Reinigen soll verbessert sein. Die Kupplungsvorrichtung soll zuverlässig, einfach und schnell zu betätigen sein. Insbesondere sollen zudem Stellkräfte zum Betätigen der Ventile weitgehend reduziert, das Entstehen von Restmengen beim Kupplungstrennen weitgehend verhindert, eine einfache Konstruktion zur synchronen Ventilschaltung erreicht sowie eine besonders funktionstüchtige und kostengünstig herstellbare Kupplungsvorrichtung bereitgestellt werden. Die Kupplungsvorrichtung soll auch in Miniaturgröße mit Leitungsdurchmessern von nur einigen Millimetern ausführbar sein. Bereits Unterkombinationen dieser Ziele sind vorteilhaft, da günstige Eigenschaften überwiegen und nachteilige Eigenschaften der bekannten Konstruktionen vermieden werden. Die erfindungsgemäße Grundkonstruktion der Kupplungsvorrichtung soll auch geeignet sein, Abreißkupplungen auszubilden, die höchsten Sicherheitsanforderungen genügen und eine Not-Schnelltrennung gewährleisten.

Die Ziele werden in Verbindung mit den Merkmalen der eingangs genannten Kupplungsvorrichtung durch die kennzeichnenden Merkmale des Anspruchs 1 erreicht.

Die Ventilbetätigungseinrichtung der erfindungsgemäßen Kupplungsvorrichtung ist so eingerichtet, dass die gegeneinandergerichteten Schließköpfe im gekuppelten Zustand der Kupplungsvorrichtung in sämtlichen Positionen mit axialem Druck unter Ausbildung eines Dichtsitzes gegeneinander gepresst werden. Grundsätzlich werden auch in der Schließ-/Trennposition die Ventilschließköpfe frei von Rückschlagventilen in der gemeinsamen Trennebene gegeneinandergepresst, wobei zugleich jeweils der Dichtsitz in den Leitungstrennöffnungen hergestellt wird. Die Ventilelemente der erfindungsgemäßen Kupplungsvorrichtung in der Anordnung mit wenigstens einem Kanal-Ventilelement werden besonders einfach betrieben bzw. betätigt. Die Ventilelemente werden besonders einfach dadurch synchron betätigt und betrieben, dass sie in dem Ventilkanal mit den auf Stoß gegeneinander arbeitenden, im Dichtsitz befindlichen Schließköpfen schiebebewegbar angeordnet sind. Im gekuppelten Zustand der Kupplungsvorrichtung kommen vorzugsweise planflächige Stirnseiten der Kolben-Schließköpfe spaltfrei oder mit nur sehr geringem Spalt gegeneinander und aneinander zu liegen.

Erfindungsgemäß steht der Leitungsverbindungskanal in zugehöriger Kupplungshälfte in seiner Sperrposition durch wenigstens eine Kanalöffnung des Leitungsverbindungskanals in direkter Verbindung mit der Kupplungsverbindungsleitung der genannten Kupplungshälfte und/oder mit einem Spülanschluss. Erfindungsgemäß kann eine zusätzliche oder andere Maßnahme darin bestehen, dass der Leitungsverbindungskanal in zugehöriger Kupplungshälfte in seiner Sperrposition über wenigstens einen in der genannten Kupplungshälfte ausgebildeten Nebenkanal mit einer Spülanschlussöffnung und/oder mit der Kupplungsverbindungsleitung in der genannten Kupplungshälfte in Verbindung steht. Damit wird für bestimmte Anwendungsfälle, z. B. zum Durchleiten von zähen und/oder leicht aushärtenden Medien einem Zusetzen des Leitungsverbindungskanals begegnet.

Die Kolben-Ventilschließköpfe arbeiten beim Öffnen der Kupplungsvorrichtung zu der gemeinsamen Trennebene beidseitig quer, das heißt in senkrechter Richtung zu dieser hin. Umgekehrt wird die Durchlassverbindung dadurch vollflächig und durchgehend hergestellt, dass die Kolben-Ventilschließköpfe in den Ventilseitenkanälen axial derart verschoben werden, dass der die gemeinsam Trennebene kreuzende Überbrückungsweg entsteht. Beim Betätigen bzw. Bewegen der Ventilelemente wird die gemeinsame Trennebene der Kupplungsvorrichtung beibehalten, diese ist also insoweit statisch. Dabei handelt es sich um die Trennebene, an der Leitungstrennöffnungen der Kupplungsvorrichtung statisch aneinander anschließen. Das heißt, dass die Kupplungshälften der Leitungstrennöffnungen an der gemeinsamen Trennebene längs dieser Ebene zum Betreiben der Ventilelemente nicht verschoben werden. Damit geht einher, dass der Ventilkanal-Überbrückungsraum zwischen den Verbindungsleitungen mit fester Größe statisch ausgebildet ist, sich also während der Ventilbetätigung nicht ändert. Die Ventilelementkolben-/Schließköpfe besetzen den Ventilkanal-Überbrückungsraum der erfindungsgemäßen Vorrichtung ohne die Verwendung von Rückschlagventilen vollständig. Dadurch wird ein schnelles synchrones Schalten der Ventilelemente erreicht. Im Ganzen baut die erfindungsgemäße Kupplungsvorrichtung besonders einfach, und sie erlaubt kostengünstige Herstellung. Insbesondere ist mit der gemeinsamen statischen Kupplungstrennebene auch erreicht, dass dort die Ventilelemente an ihrem Schließkopf leicht abzudichten sind. Von Vorteil ist zudem, dass Gehäuse der Kupplungshälften mit wesentlichen Dimensionen gleich und symmetrisch ausgebildet werden können. Gemäß Ausgestaltung können die Gehäusehälften der Kupplungsvorrichtung bzw. die Gehäuse der Ventilkanäle auch zylindrisch oder prismatisch ausgeführt werden. Insbesondere eine prismatische Formgebung mit ebenflächigen Längsseiten schafft die Möglichkeit, mehrere Kupplungsvorrichtungen in einem Block oder einem gemeinsamen Kupplungsgehäuse parallel nebeneinander anzuordnen und zusammenzufassen.

Weiterhin sind in der erfindungsgemäßen Kupplungsvorrichtung in an sich bekannter Weise vorteilhafte Eigenschaften der eingangs genannten unterschiedlichen Ventilbauformen vereinigt. Es wird eine Bauform erreicht, in der die Ventilschließköpfe als Kolben ausgebildet sind, die in dem Kreuzungskanal bzw. in den zugehörigen Ventilseitenkanälen unter einem Winkel quer zur Leitungsachse bzw. -richtung der gekuppelten Verbindungsleitungen angeordnet sind und arbeiten. Die winklige Anordnung resultiert aus dem gemeinsamen Trennquerschnitt, der infolge des Zusammenfallens des Ventilkanaltrennquerschnitts mit dem Leitungstrennquerschnitt einem Leitungs-Diagonalquerschnitt im Kreuzungsbereich von Kanal und Leitung entspricht. Obwohl die Ventilschließköpfe kolbenartig ausgebildet sind, können die Ventilelemente mit relativ geringen Kräften verstellt werden. Die winklige, schräge Anordnung des Ventilelementpaares zur Druckrichtung und damit zur Kupplungsleitungsachse hat den Vorteil, dass im Wesentlichen nicht gegen hydrostatischen Druck, sondern lediglich gegen dadurch erzeuge geringere Reibungskräfte gekuppelt wird. Die Durchströmungskupplungsleitung ist durch drei Abschnitte gebildet, die nämlich durch die beiden Verbindungsleitungen sowie einen Überbrückungsweg bzw. -raum zwischen diesen im Ventilkanal bzw. im Kreuzungsbereich bestimmt und vorgesehen sind.

Die Aneinanderordnung der Kolbenflächen von beiden Ventilschließköpfen bestimmt die Lage der gemeinsamen zugehörigen Trennebene. Diese Anordnung bzw. die dadurch erzielte diagonale Kreuzungsverbindung der Kupplungsleitung und des Ventilkanals, die zum Beispiel unter einem Winkel von 45° oder nahe 45° verlaufen, erlauben konstruktiv einfache Schließverbindungen der Kupplungsvorrichtung. Zum Beispiel können die Kupplungshälften bzw. deren Gehäuse mittels eines herkömmlichen Bayonett-Verschlusses miteinander gekuppelt werden.

Zur Parallelverschiebung findet eine translatorische Bewegung des Querkanal-Ventilelements statt. Insbesondere um die erfindungsgemäße direkte Verbindung mit der einen Verbindungsleitung herzustellen, kann der Leitungsverbindungskanal vorteilhaft um die Achse des zugehörigen Ventilseitenkanals gedreht werden und zudem, um die Ventilschließköpfe längs der Kanalachse zu verlagern, entsprechend translatorisch bewegt werden. Insbesondere in Verbindung mit dieser Gestaltung wird das den Leitungsverbindungskanal aufweisende Querkanal-Ventilelement in dem zugehörigen Ventilseitenkanal der einen Kupplungshälfte mit seinem Schließkopf so angeordnet und ausgebildet ist, dass der Schließkopf in der Durchlassposition dieses Querkanal-Ventilelements in den an der Kupplungsleitung gegenüberliegenden Ventilseitenkanal der anderen Kupplungshälfte einfasst. Zum Bewegen der auf Stoß gegeneinandergesetzten Ventil-Schließköpfe kann die Ventilbetätigungseinrichtung mit einer Druckkraftquelle, insbesondere in Form einer Druckfeder, in dem Ventilseitenkanal der einen Kupplungshälfte eingerichtet sein, während die Betätigungseinrichtung an dem Ventilseitenkanal der anderen Kupplungshälfte eine Ventilschalteinrichtung aufweisen kann, die zum Bewegen und Positionieren der Ventilelemente mit vorgegebenem Ventilelementehub in dem Ventilkanal gegen die genannte Druckkraftquelle betätigbar ist. So können die Ventilelemente durch Betätigung an einer Kupplungshälfte betrieben oder geschaltet werden.

Die erfindungsgemäße Kupplungsvorrichtung eignet sich vorteilhaft dazu, als Nottrennkupplung eingerichtet zu werden. Sie umfasst dann eine Ventilbetätigungseinrichtung und eine Kupplungslöseeinrichtung, wobei letztere mit einem Lösemittel ausgestattet ist, das bei vorgegebener Beanspruchung der Kupplungsvorrichtung die Kupplungsschließeinrichtung zum Trennen der Kupplungshälften selbsttätig öffnet und damit korrespondierend die Ventilbetätigungseinrichtung zum Herstellen der Schließ- und Trennposition der Ventilschließköpfe betätigt.

Gemäß besonderer erfindungsgemäßer Gestaltung kann insbesondere für eine prismatische Gehäuseausführung eine Stiftverbindung mit Verstiftung parallel zur Leitungsachse und mittels des die Leitung kreuzenden Ventilelements quer dazu vorgesehen werden. Insbesondere die Stiftverbindung kann genutzt werden, um die Schließverbindung als Abreißverbindung auszuführen. Die Stiftverbindung wird dann durch ein an dem kreuzenden Ventilelement angebrachtes, am anderen Ende festgelegtes Abreißseil vorgegebener Länge gelöst. Auch andere Verbindungsarten kommen für die erfindungsgemäße einfache Kupplungskonstruktion in Betracht. So können die Gehäuse der Kupplungshälften zum Beispiel mittels Schraubverbindung, einer Schanier-/Schlossverbindung, einer Hebelarmverbindung od. dgl. verbunden und geöffnet werden.

Wie an sich bekannt, wird sich der Kreuzungsventilkanal mit gerader Ventilachse erstrecken, längs derer die Ventilelemente im Ventilkanal schiebebeweglich angeordnet sind. Es ist auch denkbar, dass die beiden Ventilseitenkanäle des Ventilkanals an der Kreuzungsstelle unter unterschiedlichen Winkeln ausgerichtet sind oder die aneinander anschließenden Ventilseitenkanäle gekrümmt verlaufen. Vorzugsweise weist der Leitungsverbindungskanal durchgehend den gleichen Querschnitt wie die Verbindungsleitungen auf. Man erhält in der Verbindungsposition einen freien, unveränderten Strömungsquerschnitt.

Im Verbindungszustand fällt die Achse des Leitungsverbindungskanals mit der Leitungsachse der verbundenen Verbindungsleitung zusammen. Zum Schließen der Leitungstrennöffnungen wird das Ventilelementepaar verschoben, um die Ventilschließköpfe in ihre Dichtsitze zu bringen. Dabei kann eine Ventilführung derart sein, dass der Leitungsverbindungskanal parallel zur Leitungsachse verschoben wird.

Unteransprüche sind auf die genannten und noch andere zweckmäßige und vorteilhafte Ausgestaltungen der Erfindung gerichtet. Besonders zweckmäßige und vorteilhafte Ausführungsformen und -möglichkeiten der Erfindung werden anhand der folgenden Beschreibung der in der schematischen Zeichnung dargestellten Ausführungsbeispiele näher beschrieben. Es zeigen
- Fig. 1A und B: in axonometrischer Längsseitendarstellung sowie im ent- sprechenden Längsschnitt eine erfindungsgemäße Kupp- lungsvorrichtung mit Leitungsverbindungskanal im Zu- stand geschlossener Leitungstrennöffnungen der Kupp- lungshälften,
- Fig. 2A und B: in axonometrischer Längsseitendarstellung und in entspre- chender Schnittdarstellung die Kupplungsvorrichtung ge- mäß Fig. 1A und B im Zustand der Durchlassverbindung zwischen den Kupplungsverbindungsleitungen und
- Fig. 3A und B: in axonometrischer Längsseitendarstellung und im ent- sprechenden Längsschnitt die Kupplungsvornchtung ge- mäß dem Ausführungsbeispiel der Fig. 1A, 1B, 2A und 2B im entkuppelten Zustand bzw. im Zustand zum Ankup- peln.

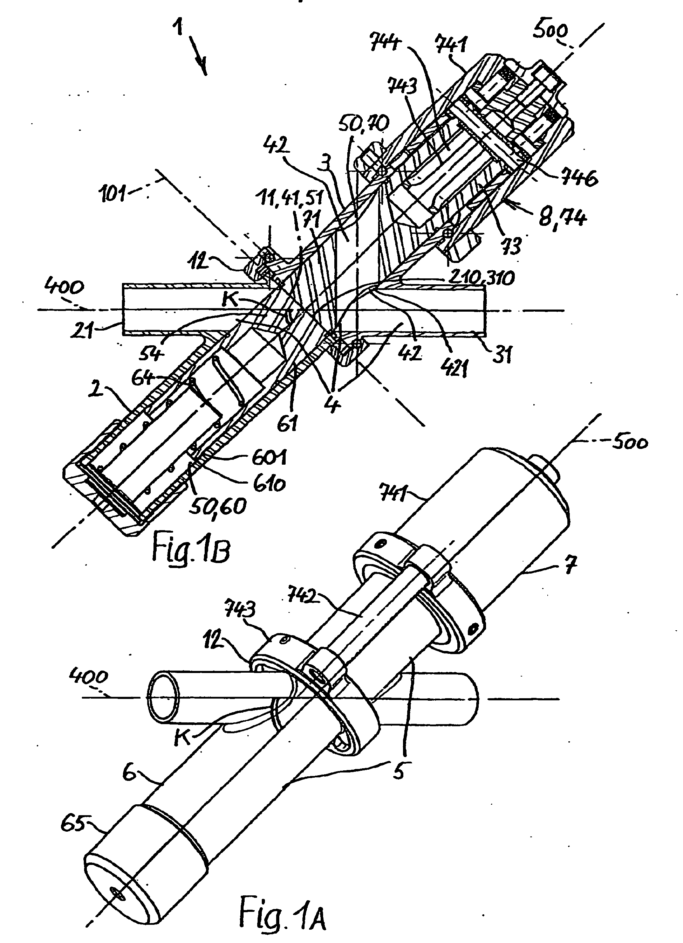

Die in Fig. 1A bis 3B im Ausführungsbeispiel dargestellte erfindungsgemäße Kupplungsvorrichtung 1 umfasst zwei Kupplungshälften 2, 3. Diese sind besonders ausgebildet, um in einer Kupplungstrennebene 101 eine Kreuzungsverbindung einer Durchströmungs-Kupplungsleitung 4 und eines Kreuzungsventilkanals 50 auszubilden.

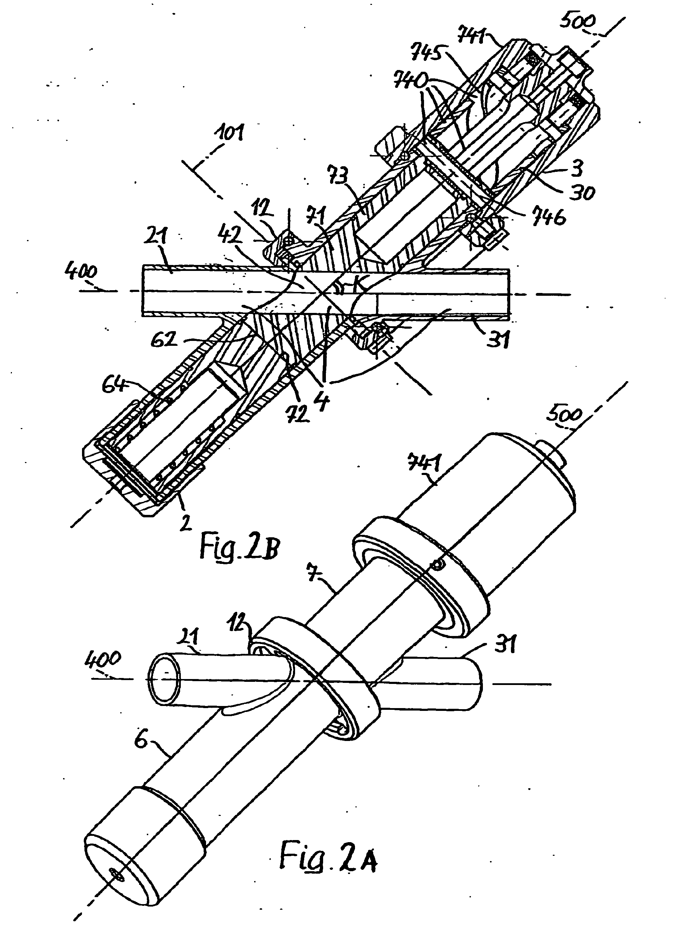

Fig. 1A, B sowie Fig.2A, B zeigen die Kupplungsvorrichtung 1 im verbundenen, mit einer Schließeinrichtung 12 zusammengefügten Zustand. Die Kupplungsleitung 4 ist durch ein Paar Verbindungsleitungen 21, 31 und einen Überbrückungsabschnitt in einem Ventilkanal-Überbrückungsraum 54 gebildet, in dessen Bereich die Verbindungsleitungen 21, 31 aneinander angeschlossen sind. Die Kupplungsleitung 4 erstreckt sich mit gerader Leitungsachse 400. Freie Enden der Verbindungsleitungen 21, 31 sind vorgesehen, um an nicht dargestellte Medien transportierende Förderleitungen, zu denen auch Leitungsstücke von Anschlussstellen gehören, angeschlossen zu werden. Im Kreuzungsbereich sind den Überbrückungsraum 54 halbierende Leitungstrennöffnungen 210, 310 gegeneinandergesetzt. Es entsteht zwischen den Verbindungsleitungen 21, 31 ein im Leitungslängsquerschnitt diagonaler Leitungstrennquerschnitt 41 in der Kupplungstrennebene 101.

Der Kreuzungsventilkanal 50 ist Bestandteil einer Ventileinrichtung 5, die Ventilelemente 61, 71 aufnimmt und führt. Der Kreuzungsventilkanal 50 ist in ein Paar den Kupplungshälften 2, 3 zugehöriger Ventilseitenkanäle 60, 70 unterteilt. Die Ventilseitenkanäle 60, 70 liegen sich an der Kupplungsvorrichtung 1 auf unterschiedlichen Seiten derselben an der Kupplungsleitung 4 gegenüber. Der Kreuzungsventilkanal 50 ist derart ausgebildet und angeordnet, dass er die Kupplungsleitung 4 an dem Leitungstrennquerschnitt 41 mit einem Ventilkanaltrennquerschnitt 51 kreuzt, der mit dem Leitungstrennquerschnitt 41 in der Kupplungstrennebene 101 zusammenfällt. Dadurch ist ein gemeinsamer, einen Ventilkanaldurchgang zwischen den beiden Ventilseitenkanälen 60, 70 sowie einen Leitungsdurchgang zwischen den beiden Verbindungsleitungen 21, 31 bestimmender gemeinsamer Trennquerschnitt 11 ausgebildet.

Die beiden Ventilelemente 61, 71 weisen in dem Kreuzungsventilkanal 50 bewegbare, gegeneinander gerichtete kolbenartige Ventilschließköpfe 62, 72 auf. Die Ventilschließköpfe 62, 72 sind dichtend in den Kreuzungsventilkanal 50 eingefügt und darin geführt. Sie weisen planflächige Stirnflächen auf, die zum Herstellen der Dichtverbindung in der Kupplungstrennebene 101 dichtend aneinanderliegen, wenn die Ventile geschlossen sind (Fig. 1B). In dieser ersten als Schließ- und Trennposition bezeichneten Position werden die Leitungstrennöffnungen 210, 310 durch die an der Kanalinnenwand abgedichteten Ventilschließköpfe 62, 72 dichtend geschlossen. Die Leitungstrennöffnungen 210, 310 sind zugleich Anschluss- und Trennöffnungen der Ventilseitenkanäle 60, 70. Das heißt, dass der gemeinsame Trennquerschnitt 11 den zur Leitungsachse 400 schrägen Diagonalquerschnitt in der Kupplungsleitung 4 ausbildet, während er in dem Kreuzungsventilkanal 50 zugleich einem an der Trennstelle senkrechten Kanalquerschnitt entspricht. Die Ventilseitenkanäle 60 und 70 sind längs gerader Ventilkanalachse 500 mit gleichbleibendem radialem Kanalquerschnitt fluchtend aneinandergefügt.

Die beiden Kupplungshälften 2, 3 der Kupplungsvorrichtung 1 gemäß Fig. 1A bis 3B sind mit ihren Gehäusen im Wesentlichen (punkt-)symmetrisch zu einem Kreuzungspunkt in der Trennebene 101 ausgeführt. Zum Beispiel weist die Kupplungsleitung 4 einen Strömungs-Kreisquerschnitt von 25 mm auf, und der Radialquerschnitt des Ventilkanals 50 ist durchgehend kreisförmig mit einem Durchmesser von zum Beispiel 40 mm. Entsprechend sind die Ventilelemente 61, 71 als kreiszylindrische Körper mit ihren Köpfen 62, 72 ausgebildet. Im Ausführungsbeispiel verläuft der Kreuzungsventilkanal 50 unter einem Kreuzungswinkel K von 45° zu der Kupplungsleitung 4. Entsprechend ist die Kupplungstrennebene 101 unter einem Winkel von 45° zu der Leitungsachse 400 gerichtet. Selbstverständlich können andere Dimensionierungen vorgenommen werden. Es kommt darauf an, dass die Schräganordnung der Trennebene in der Kupplungsleitung 4 verwirklicht wird.

Im Ausführungsbeispiel der Fig. 1A bis 3B sind die Kupplungshälften 2, 3 an der Trennebene mit einer Schließeinrichtung 12 aneinandergefügt, die einen an sich bekannten Bayonett-Verschluss umfasst. Wesentlich ist dabei, dass die Trennebene 101 in dieser Verbindung statisch ist, also eine flanschartige Verbindung od. dgl. hergestellt ist. Die für beide Kupplungshälften gemeinsame Trennebene 101 ist beim Zusammenfügen der Kupplungshälften 2, 3 bzw. beim Entkuppeln derselben als festliegende Ebene der Kupplungsvorrichtung 1 anzusehen. Das heißt, dass der Ventilkanal-Überbrückungsraum 54 zwischen den Verbindungsleitungen 21, 31 unabhängig von der Position der Ventilelemente 61, 71 festgelegt ist.

In Fig. 1A bis 3B erkennt man, dass die Ventileinrichtung 5 derart ausgebildet ist, dass sie die Ventilelemente 61, 71 in der geschlossenen Kupplungsvorrichtung 1 mit ihren ebenflächigen Schließköpfen 62, 72 stets mit axialem Druck auf Stoß zusammenhält. Zu diesem Zweck ist in der einen Kupplungshälfte 2 eine Hälfte 6 der Ventileinrichtung 5 mit in dem Ventilseitenkanal 60 angeordneter Druckfeder 64 ausgebildet. Einerseits greift die Druckfeder 64 in eine axiale Ausnehmung im Fuß 63 des Ventilelements 61 zum Abstützen desselben in axial geführter Richtung ein, und andererseits ist sie am Ventilgehäuse abgestützt. Die andere Hälfte 7 der Ventileinrichtung 5 in der Kupplungshälfte 3 ist mit einem Betätigungsmechanismus einer Betätigungseinrichtung 8 ausgestattet, durch den der Schubverbund der federbelasteten Ventilelemente 61, 71 längs der Ventilkanalachse 500 zwischen der Schließ-/Trennposition und einer zweiten als Öffnungsposition bezeichneten Position der Ventilschließköpfe 62, 72 hin- und herbewegbar ist. In der Ventil-Öffnungsposition fasst das Ventilelement 71 mit seinem Schließkopf 72 in den gegenüberliegenden Ventilseitenkanal 60 ein, wie dies in Fig. 2B dargestellt ist.

Das Ventilelement 71 weist die Besonderheit auf, dass es mit einem Leitungsverbindungskanal 42 ausgestattet ist, der durch eine Querdurchbohrung unter einem Winkel zur Ventilkanalachse 500 bzw. zur Ventilelementachse gebildet ist, der gleich dem Kreuzungswinkel K ist.

Wie aus Fig. 2B ersichtlich, wird die Öffnungs- oder Durchlassposition dadurch erreicht, dass der Leitungsverbindungskanal 42 die beiden Verbindungsleitungen 21, 31 durch den Überbrückungsraum 54 hindurch fluchtend miteinander verbindet. Die Strömungsquerschnitte sind übereinstimmend ausgebildet. So weist die Kupplungsleitung 4, die durch die beiden Verbindungsleitungen 21, 31 und den Verbindungskanal 42 gebildet ist, einen durchgängig freien und gleichbleibenden Strömungsquerschnitt auf.

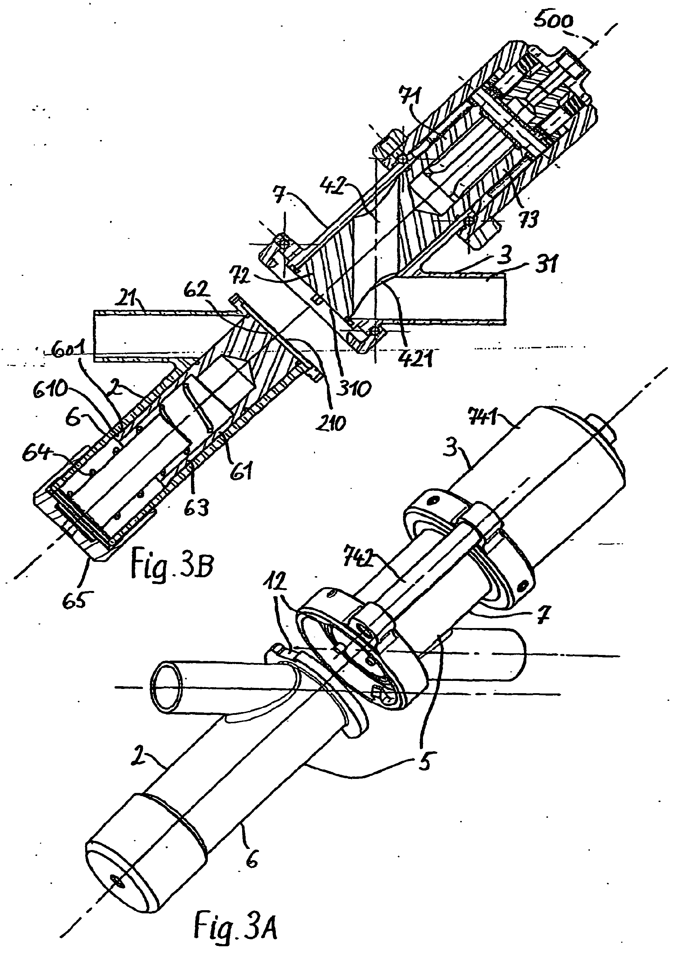

Insbesondere aus Fig. 1B und 3B ist die Schließ- und Trennposition ersichtlich, die zugleich eine Sperrposition der Ventilelemente 61, 71 ausbildet. In dieser Position sind die beiden Leitungstrennöffnungen 210, 310 dichtend geschlossen, und, wie in Fig. 1B dargestellt, die Kolbenflächen der Ventilelemente 61, 71 befinden sich in flächigem Stoß-und Dichtsitz. Wie gleichfalls aus Fig. 1B und 3B hervorgeht, befindet sich das Ventilelement 71 in dieser Position in der aus der Öffnungs-/Durchlassposition in den Ventilseitenkanal 70 zurückgedrängten Stellung. An der Innenwand des Ventilseitenkanals 60 ist eine Schulter 601 ausgebildet, mit der ein Rand 610 zusammenwirkt, um sicherzustellen, dass der Ventilschließkopf 62 in der Trennebene 101 abschließt. Wesentlich ist, dass die Schließköpfe 62 und 72 in den Ebenen der Leitungstrennöffnungen abschließen, also nicht aus diesen hervorragen.

Die durch die Druckkraft der Feder 64 bewirkte Rückholbewegung des Ventilelements 71 setzt sich aus überlagerten Bewegungen zusammen, nämlich einer translatorischen Schiebebewegung längs der Ventilkanalachse 500 und einer Rotation um die Ventilkanalachse 500 um 180°. Dadurch gelangt der Leitungsverbindungskanal 42 in die in Fig. 1B und 3B dargestellte Übereckposition mit der Verbindungsleitung 31. Das heißt, dass eine Mündung oder Kanalöffnung 421 des Leitungsverbindungskanals 42 im Kreuzungsbereich in die Öffnung der Verbindungsleitung 31 an der inneren Ventilkanalwand hineinmündet. Dabei befinden sich die Achsen der Verbindungsleitung 31 und des Leitungsverbindungskanals 42 bei einem Kreuzungswinkel K=45° unter einem Winkel von 90°. Mit entsprechender überlagerter translatorischer und rotatorischer Bewegung gelangt der Leitungsverbindungskanal 42 aus der Übereckposition (Fig. 1B und 3B) in die Öffnungs-/Durchlassposition (Fig. 2B).

Die Dreh-/Schiebebewegung des den Leitungsverbindungskanal 42 aufweisenden Querkanal-Ventilelements 71 wird durch eine Führungseinrichtung 740 der Ventilbetätigungseinrichtung 8 bewerkstelligt, die zwischen dem Ventilseitenkanal 70 und dem Fuß 73 des Ventilelements 71 ausgebildet ist.

Die Ventilbetätigungseinrichtung 8 umfasst ein an der Kupplungshälfte 3 ausgebildetes Betätigungsmittel 74 mit einem Kappenteil 741, das auf dem Gehäuse des Ventilseitenkanals 70 um die Ventilkanalachse 500 mit Kugellager drehbar, jedoch in Achsrichtung versatzfrei gelagert ist. Die zylinderförmigen Teile weisen innen und außen Kreisquerschnitte auf.

Die Kappe 741 ist über einen stabförmigen, achsparallelen Handgriff 742 drehfest an einen Überwurfring 743 des Bayonettverschlusses der Schließeinrichtung 12 angeschlossen. Der Bayonettverschluss lässt sich durch eine Drehung um 180° um die Ventilkanalachse 500 öffnen bzw. schließen. Das Kappenteil 741 erfährt dabei eine entsprechende Drehung. Es ist mittels Schraubverbindung drehfest mit einem in der Kanalachse 500 sich erstreckenden Achszapfen 743 verbunden, der in einem Vierkant-Schiebesitz in ein axiales Langloch 744 in dem Fuß 73 des Ventilelements 71 einfasst. Durch diesen Sitz ist das Ventilelement 71 drehfest mit dem Kappenteil 741 verbunden, während es in axiale Richtung zwischen Durchlassposition und Sperrposition des Leitungsverbindungskanals 42 - bzw. umgekehrt - infolge 180°-Drehung verschoben wird. Der erforderliche Hub wird durch eine in die Innenwand des Gehäuses der Kupplungshälfte 3 eingebrachte Kurve 745 gesteuert, in die ein am Ende des Ventilfußes 73 festes Rollensegment 746 gleitend einfasst.

Man erkennt, dass sich die Kupplungsvorrichtung 1 im Ausführungsbeispiel einfach mittels des Handgriffes 742 zum Kuppeln und Entkuppeln an der einen Kupplungshälfte 3 betätigen lässt. Zeitgleich sorgen die federbelasteten, im Schubverbund betriebenen Ventilelemente 61, 71 für das Öffnen bzw. Schließen der Kupplungsleitung 4, wobei die Ventile durch den beschriebenen Mechanismus synchron geschaltet werden. Das totraumfreie Aneinandersitzen der Ventilschließköpfe 62, 72 reduziert den Anfall von Restmenge beim Entkuppeln von mit Medium beaufschlagten Verbindungsleitungen 21, 31 erheblich. Medium, das beim Entkuppeln gegebenenfalls in dem Leitungsverbindungskanal 42 anfällt, kann in der Sperrposition des Ventilelements 71 in die Verbindungsleitung 31 abfließen.

Die Montage der Ventilseitenkanäle 60, 70 der Kupplungsvorrichtung 1 ist einfach. Teile der Ventileinrichtung 5 und der Betätigungseinrichtung 8 lassen sich bei demontierter Kappe 741 in den Ventilkanal 50 einbringen. Auch der andere Ventilseitenkanal 60 weist an seinem freien Ende ein Kappenteil 65 auf, das im nicht montierten Zustand eine Öffnung zum Einbringen der Teile in den Seitenkanal 60 bildet.

Andere Ausführungen zum Befreien des Leitungsverbindungskanals 42 von gegebenenfalls dort angefallenem Medium können zum Beispiel dadurch verwirklicht werden, dass der Leitungsverbindungskanal 42 in der Sperrposition des Ventilelements 71 statt der Verbindung mit der Verbindungsleitung 31 oder zusätzlich mit einem nicht dargestellten Spülkanal und -anschluss in dem Gehäuse des Ventilseitenkanals 70 verbunden wird.

In nicht dargestellter Ausführung kann die Konstruktion der Ventileinrichtung 5 zum Beispiel auch derart sein, dass das Ventilelement 71 mit dem Leitungsverbindungskanal 42 ohne Drehung parallel zur Leitungsachse 400 verschoben wird. Gegebenenfalls kann dann ein Spülkanal mit Spülanschluss zur Verbindung mit dem Leitungsverbindungskanal vorgesehen werden.

Durch andere nicht dargestellte Ausführungsformen kann jedes Schalten bzw. Betätigen der Ventilelemente 61, 71 zum Kuppeln bzw. Entkuppeln eingerichtet werden, das die Ventilelemente 61, 71 gegen Druckbelastung, die auch an beiden Ventilkanalhälften 6, 7 erzeugt werden kann, im Schubverbund hin- und herbewegt. Es können Ventilbetätigungseinrichtungen ausgebildet werden, mit denen die Ventilelemente manuell betrieben bzw. geschaltet werden. In besonderen, insbesondere gesteuerten Anwendungsfällen kann die Ventileinrichtung mit hydraulischen, pneumatischen und/oder elektrischen Antrieben geschaltet werden.

Gemäß einer besonderen, nicht weiter dargestellten Ausführung einer KupplungsSchließeinrichtung kann diese derart sein, dass der Ventilschließkopf 72 des Querkanal-Ventilelements 71 in dem einen Ventilseitenkanal 70 als Schließ-Stift- oder Bolzenelement einer Stift-Klemmverbindung genutzt wird. Die Ventileinrichtung 5 wird dann so dimensioniert und eingerichtet, dass der Schließkopf 72 eine verbindungswirksame Stifteinfassung in den anderen Ventilseitenkanal 60 hinein im Öffnungszustand an der gekuppelten Kupplungseinrichtung 1 herstellt. Zur Ausbildung einer gekreuzten Stiftverbindung werden an den Gehäusen der Kupplungshälften 2, 3 Bolzen oder Stifte angeordnet, die die Kupplungstrennebene 101 zum Herstellen einer Klemmverbindung Durchfassen und in zu dem Querkanal-Ventilelement 71 gekreuzte Richtung orientiert sind. Eine solche Kreuzstiftverbindung kann zweckmäßig als Schließeinrichtung mit Seilabriss einer Nottrennkupplung ausgebildet werden. Das Abrissseil wird an den durch das Querkanal-Ventilelement 71 gebildeten Stiftbolzen derart angeschlossen, dass dieser zum Abriss aus der gegenüberliegenden Ventilhälfte 6 zurückgezogen wird, so dass sich die Stiftverbindung löst. Dabei wird der beschriebene Ventilelemente-Schubverbund zum Freigeben des Durchgangs mittels des Leitungsverbindungskanals 42 wirksam.

Aufgrund der erfindungsgemäßen Konstruktion lässt sich die Abdichtung der Kupplungskomponenten einfach gestalten. Im Ausführungsbeispiel der Fig. 1A bis 3B sind die Ventilgehäuse jeweils mit O-Ringen versehen, die die Ventilelemente 61, 71 gegen das Ventilgehäuse abdichten. Statt dessen oder in Kombination damit sind andere Maßnahmen möglich. Es können Ventilelemente mit einer dichtenden Ummantelung oder einer Dichtflächenbeschichtung vorgesehen werden. Die Ventilkörper können aus besonderen Dichtungswerkstoffen wie zum Beispiel PTFE (Polytetrafluorethylen) gefertigt werden. Ventilelemente können auch besonders eingeschliffen und eingepasst werden, um z. B. aus Kunststoff eine Kupplungseinrichtung ohne besondere Dichtungselemente herzustellen. Auch die Querschnitte der Ventilelemente könne bei Bedarf besonders angepasst werden. Insbesondere können Ventilkörper mit prismatischen Formen ausgebildet werden.

## Patentansprüche

1. Kupplungsvorrichtung (1) zum dichtenden Verbinden von flüssige oder gasförmige Medien transportierenden Förderleitungen, umfassend zwei Kupplungshälften (2, 3), die längs einer Leitungsachse (400) eine durch ein Paar Verbindungsleitungen (21, 31) zusammengefügte Durchströmungs-Kupplungsleitung (4) ausbilden, wobei die Verbindungsleitungen (21, 31) bei gekuppelter Kupplungsvorrichtung (1) mit gegeneinandergesetzten Leitungstrennöffnungen (210, 310) einen Leitungstrennquerschnitt (41) zwischen den Verbindungsleitungen (21, 31) in einer Kupplungstrennebene (101) bestimmen, und umfassend eine Schließeinrichtung (12, 120) zum Schließen und Öffnen der Kupplungsvorrichtung (1) sowie eine Ventileinrichtung (5) mit einem Paar Ventilelemente (61, 71), die zum Öffnen der Kupplungsvorrichtung (1) die Leitungstrennöffnungen (210, 310) schließen, wobei
die Ventileinrichtung (5) einen die Ventilelemente (61, 71) aufnehmenden und in Richtung seiner Achse (500) führenden Kreuzungsventilkanal (50) aufweist, der in ein Paar den Kupplungshälften (2, 3) zugehöriger Ventilseitenkanäle (60, 70), die sich bei gekuppelter Kupplungsvorrichtung (1) auf unterschiedlichen Seiten derselben an der Kupplungsleitung (4) gegenüberliegen, unterteilt und derart angeordnet ist, dass er die Kupplungsleitung (4) an dem Leitungstrennquerschnitt (41) mit einem Ventilkanaltrennquerschnitt (51) kreuzt, der mit dem Leitungstrennquerschnitt (41) in der Kupplungstrennebene (101) zusammenfällt, so dass ein gemeinsamer, einen Ventilkanaldwchgang zwischen den beiden Ventilseitenkanälen (60, 70) sowie einen Leitungsdwchgang zwischen den beiden Verbindungsleitungen (21, 31) bestimmender gemeinsamer Trennquerschnitt (11) ausgebildet ist, wobei die beiden Ventilelemente (61, 71) in dem Kreuzungsventilkanal (50) bewegbare, gegeneinandergerichtete kolbenartige Ventilschließköpfe (62, 72) aufweisen, die derart angeordnet und ausgebildet sind, dass sie in erster Position die Leitungstrennöffnungen (210, 310) schließen und in zweiter Position eine Durchlassverbindung der Verbindungsleitungen (21, 31) herstellen, und
wenigstens ein Ventilelement (71) mit einem zur Ventilkanalachse (500) quergerichteten Leitungsverbindungskanal (42) derart ausgebildet ist, dass dieses Querkanal-Ventilelement (71) zum Entkuppeln bzw. Kuppeln der Kupplungsvorrichtung (1) zwischen einer in dem zugehörigen Ventilseitenkanal (70) der einen Kupplungshälfte (3) eingenommenen Sperrposition und einer Durchlassposition hin- und herbewegbar ist, wobei der Leitungsverbindungskanal (42) in der Durchlassposition die Leitungstrennöffnungen (210, 310) in die Durchlassverbindung setzt,
**dadurch gekennzeichnet,**
**dass** die Kupplungsvorrichtung (1) mit einer Ventilbetätigungseinrichtung (8) eingerichtet ist, die die gegeneinandergerichteten Schließköpfe (62, 72) der Ventilelemente (61, 71) in Positionen zum Kuppeln und Entkuppeln bringt, wobei die Ventilbetätigungseinrichtung (8) so eingerichtet ist, dass die gegeneinandergerichteten Schließköpfe (62, 72) im gekuppelten Zustand der Kupplungsvorrichtung (1) in sämtlichen Positionen mit in axialer Richtung des Ventilkanals (50) wirkendem Druck unter Ausbildung eines Dichtsitzes auf Stoß gegeneinander gepresst sind, wobei die Ventilelemente (61, 71) in dem Ventilkanal (50) im Schubverbund schiebebewegbar angeordnet sind, und dass der Leitungsverbindungskanal (42) des Querkanal-Ventilelements (71) in zugehöriger Kupplungshälfte (3) in seiner Sperrposition durch wenigstens eine Kanalöffnung (421) des Leitungsverbindungskanals (42) in Verbindung mit der Kupplungsverbindungsleitung (31) der genannten Kupplungshälfte (3) und/oder mit einem Spülanschluss steht.

2. Kupplungsvorrichtung nach Anspruch 1, **dadurch gekennzeich net**, dass der Leitungsverbindungskanal (42) des Querkanal-Ventilelements (71) in zugehöriger Kupplungshälfte in seiner Sperrposition über wenigstens einen in der genannten Kupplungshälfte ausgebildeten Nebenkanal mit einer Spülanschlussöffnung und/oder mit der Kupplungsverbindungsleitung (31) in der genannten Kupplungshälfte in Verbindung steht.

3. Kupplungsvorrichtung nach Anspruch 1 oder 2, **dadurch gekenn-zeichnet**, dass wenigstens ein den Leitungsverbindungskanal (42) aufweisendes Querkanal-Ventilelement (71) des Ventilelementpaares translatorisch und/oder rotatorisch zwischen der Sperrposition und der Durchlassposition hin- und herbewegbar ist.

4. Kupplungsvorrichtung nach einem der Ansprüche 1 bis 3, **dadurch gekennzeichnet, dass** die Ventilbetätigungseinrichtung (8) mit einer Druckkraftquelle, insbesondere in Form einer Druckfeder (64) in dem Ventilseitenkanal (60) der einen Kupplungshälfte (2) eingerichtet ist, während die Ventilbetätigungseinrichtung (8) an dem Ventilseitenkanal (70) der anderen Kupplungshälfte (3) eine Ventilschalteinrichtung (74) auf weist, die zum Bewegen und Positionieren der Ventilelemente (61, 71) mit vorgegebenem Ventilelementehub in dem Ventilkanal (50) gegen die genannte Druckkraftquelle (64) betätigbar ist.

5. Kupplungsvorrichtung nach einem der Ansprüche 1 bis 4, **dadurch gekennzeichnet, dass** das Querkanal-Ventilelement (71) mit dem Leitungsverbindungskanal (42) in dem zugehörigen Ventilseitenkanal (70) der einen Kupplungshälfte (3) mit seinem Schließkopf (72) so angeordnet und ausgebildet ist, dass der Schließkopf (72) in der Durchlassposition dieses Kanal-Ventilelements (71) in den an der Kupplungsleitung (4) gegenüberliegenden Ventilseitenkanal (60) der anderen Kupplungshälfte (2) einfasst, wobei das in die andere Kupplungshälfte (2) einfassende Querkanal-Ventilelement (71) in dieser Einfassposition ein stiftartiges Klemmelement bildet, das Bestandteil der KupplungsschlieBeinrichtung ist, die mit bol-zenartigen Klemmelementen ausgebildet ist.

## Claims

1. A coupling apparatus (1) for sealed connection of conveying lines transporting fluid or gaseous media, comprising two coupling halves (2, 3), which form a flow-through coupling line (4) joined together by a pair of connection lines (21, 31) along a line axis (400), wherein the connection lines (21,31) determine a line separation cross-section (41) between the connection lines (21, 31) in a coupling separation plane (101) in the coupled state of a coupling apparatus (1) with line separation openings (210, 310) connected end-to-end, and comprising a closing device (12, 120) for closing and opening the coupling apparatus (1) as well as a valve device (5) with a pair of valve elements (61,71), which close the line separation openings (210, 310) for the opening of the coupling apparatus (1), wherein
the valve device (5) has a crossing valve channel (50) receiving the valve elements (61, 71) land leading the valve elements (61, 71) in the direction of the channel's axis (500), which valve channel (50) is subdivided into a pair of valve side channels (60, 70) associated with the coupling halves (2, 3), which valve side channels (60, 70), in the coupled state of the coupling apparatus (1), lie opposite each other on different sides of the coupling apparatus (1) on the coupling line (4), and which valve channel (50) is arranged such that it crosses the coupling line (4) at the line separation cross-section (41) with a valve channel separation cross-section (511), which coincides with the line separation cross-section (41) in the coupling separation plane (101), so that a joint separation cross-section (11) determining a valve channel duct between the two valve side channels (60, 70) as well as a line duct between the two connection lines (21, 31) is formed, wherein the two valve elements (61, 71) in the crossing valve channel (50) have movable, oppositely positioned, piston-like valve closing heads (62, 72), which are arranged and formed such that they close the line separation openings (210, 310) in a first position and establish a passage connection of the connection lines (21, 31) in a second position and
at least one valve element (71) is formed with a line connection channel (42) aligned transverse to the valve channel axis (500) such that this transverse channel valve element (71) is movable back and forth between a lock position assumed in the associated valve side channel (70) of the one coupling half (3) and a passage position for decoupling or respectively coupling of the coupling apparatus (1), wherein the line connection channel (42) in the passage position sets the line separation openings (210, 314) into the passage connection,
**characterized in**
**that** the coupling apparatus (1) is designed with a valve actuation device (8), which brings the oppositely positioned closing heads (62, 72) of the valve elements (61, 71) in positions for coupling and decoupling, wherein the valve actuation device (8) is set up such that the oppositely positioned closing heads (62, 72) in the coupled state of the coupling apparatus (1) in all positions with pressure acting in the axial direction of the valve channel (50) are pressed together end-to-end under formation of a seal seat, wherein the valve elements (61, 71) in the valve channel (50) are arranged as a pushing unit in a slideably movable manner, and in that the line connection channel (42) of the transverse channel valve element (71) in the associated coupling half (3) in its lock position is connected through at least one channel opening (421) of the line connection channel (42) with the coupling connection line (31) of said coupling half (3) and/or with a flush connection.

2. The coupling apparatus according to claim 1, **characterized in that** the line connection channel (42) of the transverse channel valve element (71) in the associated coupling half in its lock position is connected with a flush connection opening and/or with the coupling connection line (31) in said coupling half via at least one lateral channel formed in said coupling half.

3. The coupling apparatus according to claim 1 or 2, **characterized in that** at least a transverse channel valve element (71) of the valve element pair, which transverse channel valve element (71) comprises the line connection channel (42), is moveable back and forth in a translatory and/or rotary manner between the lock position and the passage position.

4. The coupling apparatus according to claims 1 to 3, **characterized in that** the valve actuation device (8) is designed with a pressure source, in particular in the form of a pressure spring (64) in the valve side channel (60) of the one coupling half (2), while the valve actuation device (8) on the valve side channel (70) of the other coupling half (3) has a valve switch device (74), which is actuatable for the moving and positioning of the valve elements (61, 71) with specified valve elements stroke in the valve channel (50) against said pressure source (64).

5. The coupling apparatus according to one of claims 1 to 4, **characterized in that** the transverse channel valve element (71) with the line connection channel (42) in the associated valve side channel (70) of the one coupling half (3) with its closing head (72) is arranged and formed such that the closing head (72) in the passage position of this channel valve element (71) engages into the valve side channel (60) of the other coupling half (2) lying opposite the coupling line (4), wherein the transverse channel valve element (71) engaging into the other coupling half (2) forms a pin-like clamping element in this engaging position, which is part of the coupling closing device, which is designed with bolt-like clamping elements.

## Revendications

1. Dispositif d'accouplement (1) permettant de relier de façon étanche des conduits transportant des fluides gazeux ou liquides, comportant deux demi-accouplements (2, 3) qui forment un conduit d'accouplement transversal (4) assemblé par une paire de conduites de raccord (21; 31) le long d'un axe de conduite (400), les conduites de raccord (21,31) délimitant avec des orifices de séparation des conduits opposés (210, 310) sur le dispositif d'accouplement (1) une section transversale de séparation des conduits (41) entre les conduits de raccord (21, 31) dans un plan de séparation des conduits (101), et comportant un système de fermeture (12, 120) permettant de fermer et ouvrir le dispositif d'accouplement (1) ainsi qu'un système de valves (5) composé de deux valves (61, 71) qui ferment les orifices de séparation des conduits (210, 310) pour ouvrir le dispositif d'accouplement (1), dans lequel
le système de valves (5) comporte un canal de croisement de valve (50) intégrant l'une des valves (61, 71) et orienté suivant son axe (500), qui divise en deux les demi-accouplements (2, 3) des canaux latéraux de valve correspondants (60, 70) faisant face au conduit d'accouplement (4) sur des côtés différents du dispositif d'accouplement (1), et qui est disposé de façon à ce que le conduit d'accouplement (4) croise au niveau de la coupe transversale de séparation des conduits (41) une coupe transversale de séparation des canaux de valve (51), la dite coupe transversale de séparation des canaux de valve (51) coïncidant avec la coupe transversale de séparation des conduits (41) dans le plan de séparation des conduits (101) de façon à former une coupe transversale de séparation (11) commune déterminant un accès de canal de valve entre les deux canaux latéraux de valve (60, 70) ainsi qu'un accès de conduit entre les deux conduits de liaison (21, 31), les deux valves (61, 71) comportant dans le canal de croisement de valves (50) des têtes de fermeture de valve (62, 72) mobiles montées en opposition comme des pistons, les dites têtes de fermeture de valve (62, 72) étant conçues et disposées pour fermer les orifices de séparation des conduits (210, 310) en première position et pour produire une liaison de communication des conduits de liaison (21, 31) en deuxième position, et
au moins une valve (71) est dotée d'un canal de liaison de conduit (42) transversal à l'axe de canal de valve (500), si bien que cette valve de canal transversal (71) peut être déplacée lors de l'accouplement ou du désaccouplement du dispositif d'accouplement (1) entre une position de blocage située dans le canal transversal de valve (70) correspondant à l'un des demi-accouplements (3) et une position de passage, le canal de liaison de conduit (42) plaçant les orifices de séparation de conduits (210, 310) en liaison de communication dans la position de passage,
**caractérisé en ce que**
le dit dispositif d'accouplement (1) est équipé d'un système d'activation de valve (8) qui amène les têtes de fermeture (62, 72) opposées des valves (61, 71) en position d'accouplement et de désaccouplement, le dit système d'activation de valve (8) étant conçu pour que les dites têtes de fermeture (62, 72) opposées soient pressées l'une contre l'autre, par une pression exercée suivant l'axe du canal de valve (50) sous l'effet d'un siège d'étanchéité, dans toutes les configurations où le dispositif d'accouplement (1) est en position accouplée, les valves (61; 71) pouvant coulisser dans le canal de valve (50) sous l'effet d'une poussée conjointe ; et
le canal de liaison de conduit (42) de la valve de canal transversal (71) dans le demi-accouplement (3) correspondant est relié en position de blocage au conduit de liaison d'accouplement (31) du dit demi-accouplement (3) et/ou à un raccord de rinçage par au moins un orifice de canal (421) du canal de liaison de conduit (42).

2. Dispositif d'accouplement selon la revendication 1, **caractérisé en ce que** le canal de liaison de conduit (42) de la valve de canal transversal (71) dans le demi-accouplement correspondant est relié dans sa position de blocage à un orifice de raccord de rince et/ou au conduit de liaison d'accouplement (31) dans le dit demi-accouplement par au moins canal latéral formé dans les dits demi-accouplements.

3. Dispositif d'accouplement selon la revendication 1 ou la revendication 2, **caractérisé en ce qu'**au moins une valve de canal transversal (71) de la paire de valves comportant le canal de liaison de conduit (42) peut être déplacé suivant une translation et/ou une rotation entre la position de blocage et la position de passage.

4. Dispositif d'accouplement selon l'une des revendications 1 à 3, **caractérisé en ce que** le système d'activation de valve (8) est équipé d'une source de force de poussée dans le canal latéral de valve (60) de l'un des demi-accouplements (2), notamment sous la forme d'un ressort de pression (64), alors que le système d'activation de valve (8) du canal latéral de valve (70) de l'autre demi-accouplement (3) comporte un système de fermeture de valve (74) pouvant être actionné pour placer et déplacer les valves (61, 71) suivant la course de valve paramétrée dans le canal de valve (50).

5. Dispositif d'accouplement selon l'une des revendications 1 à 4, **caractérisé en ce que** la valve de canal transversal (71) est conçue et disposée avec sa tête de fermeture (72), par rapport au canal de liaison de conduit (42) dans le canal latéral de valve (70) correspondant de l'un des demi-accouplements (3), pour que la dite tête de fermeture (72) entoure dans la position de passage cette valve de canal (71) dans le canal latéral de valve (60) de l'autre demi-accouplement (2) opposé au conduit d'accouplement (4), la dite valve de canal transversal (71) entourant l'autre demi-accouplement (2) formant dans cette position d'entourage un élément de blocage en forme de cheville intégré au système de fermeture d'accouplement constitué d'éléments de blocage en forme de rivets.
